# EUROPEAN PATENT APPLICATION

(11) **EP 3 719 955 A1**
(43) Date of publication of application: **07.10.2020**
(21) Application number: 18882699.4
(22) Date of filing: 30.08.2018
(51) Int. Cl.: H02J 13/00

(54) **BATTERY-SWAPPING STATION CONTROL SYSTEM BASED ON WIRELESS COMMUNICATION AND BATTERY-SWAPPING STATION**

(30) Priority: 28.11.2017 CN 201711216951
(71) Applicant: NIO Nextev Limited, Central, Hong Kong (HK)
(72) Inventor: JIA, Lei, Shanghai 201804 (CN)
(74) Representative: Vossius & Partner Patentanwälte Rechtsanwälte mbB
(86) International application number: PCT/CN2018/103260
(87) International publication number: WO 2019/105081

(57) **Abstract**

The present invention provides a battery swap station control system based on wireless communication and a battery swap station. The battery swap station control system includes a master control unit, a state management module and multiple subcontrol units, wherein, the master control unit communicates with the state management module in a wireless communication manner; each of the subcontrol units respectively communicates with the state management module in a wireless communication manner; the master control unit is used for transmitting a corresponding control instruction to the state management module according to battery swap requirements; the state management module is used for calling corresponding subcontrol units according to the control instruction and controlling an operation time sequence of each subcontrol unit; and each of the subcontrol units controls one battery swap station subsystem in real time. According to the present invention, wired communication and a communication control manner of slide link components are replaced with a wireless communication control manner, a control method for distributed control and centralized management is adopted, and real-time property and reliability of battery swap station control are increased.

## Description

### Field of the Invention

The present invention relates to the technical field of control of battery swap stations, in particular to a battery swap station control system based on wireless communication and a battery swap station.

### Background of the Invention

With the supply pressure brought by the traditional fossil energy consumption and exhaust pollution, energy-saving and environment-friendly electric vehicles present blowout development in recent years. Since development of the electric vehicles is limited by a battery technology, limited battery capacity and long charging time are inevitable questions at the present stage. However, in many charging ways, a battery swap way is a rapid, convenient and safe method.

A battery swap station is composed of a parking platform, a battery pick-and-replace trolley, a battery compartment storage charging rack, a battery compartment lift and other auxiliary equipment. A battery swap process is completed by unified collaboration of these components. Each component respectively includes multiple actuating mechanisms. Generally, actions of these actuating mechanisms are controlled by servo motors and the like, so an existing battery swap station control system has characteristics as follows: (1) the control system is provided with multiple sensor inputs, and remote communication slave stations of multiple output actuating components; and (2) the control system is provided with an RGV (rail guide vehicle) and other mobile components. Based on the above characteristics, the existing battery swap station control system has defects that communication cables are numerous and are easy to damage, multiple in failure nodes and difficult to maintain and slide links of the mobile components are easily damaged and needs to be frequently replaced.

### Summary of the Invention

Technical problems to be solved in the present invention are to provide a battery swap station control system based on wireless communication and a battery swap station. Wired communication and a communication control manner of slide link components are replaced with a wireless communication control manner, a control method for distributed control and centralized management is adopted, and real-time property and reliability of battery swap station control are increased.

In order to solve the aforementioned technical problems, one aspect of the present invention provides the battery swap station control system based on wireless communication, including: a master control unit, a state management module and multiple subcontrol units,
wherein, the master control unit communicates with the state management module in a wireless communication manner; and each of the subcontrol units respectively communicates with the state management module in a wireless communication manner;
the master control unit is used for transmitting a corresponding control instruction to the state management module according to battery swap requirements;
the state management module is used for calling corresponding subcontrol units according to the control instruction and controlling an operation time sequence of each subcontrol unit; and
each of the subcontrol units controls one battery swap station subsystem in real time.

Further, the subcontrol units set two task cycles, that is, a first task cycle and a second task cycle respectively. The first task cycle is smaller than the second task cycle; in the first task cycle, dynamic response instructions are output to actuating mechanisms of the battery swap station subsystems in real time so as to perform individual internal control;
when the first task cycle is located in an idle condition, the battery swap station subsystems enter the second task cycle, process data of the battery swap station subsystems is acquired, and the process data is uploaded to the state management module.

Further, the subcontrol units include core registers. Hardware interfaces of the battery swap station subsystems are scanned in the first task cycle in a multi-core and multithreaded manner, and if hardware faults of the battery swap station subsystems occur, the subcontrol units directly perform fault response.

Further, the fault response includes fault interrupt and linkage downtime among the various battery swap station subsystems.

Further, the process data includes temperature and water level.

Further, the state management module includes a cache unit, used for storing data contents of the subcontrol units and the master control unit in one or more preset cycles in real time, wherein each preset cycle is greater than the second task cycle.

Further, the cache unit is provided with a retransmission mechanism. When the subcontrol units have communication failure, after communication connection is established between the subcontrol units and the cache unit, the cache unit transmits data contents of the subcontrol units in one cycle or multiple cycles currently to the subcontrol units.

Further, the cache unit includes a cache control subunit. When a battery swap station subsystem corresponding to a certain subcontrol unit is located in an idle state, the cache control subunit recovers corresponding idle memory and controls the idle memory to be used for storing control subunit data in other idle states.

Further, the state management module further includes a data forwarding unit, used for receiving the process data and forwarding the process data to the master control unit.

Further, the master control unit is further used for performing analytic processing on the process data and transmitting a corresponding feedback instruction.

Further, the master control unit compares the process data with a preset process data scope, and if the process data is not included in the preset process data scope, the master control unit controls to transmit an alarm signal.

Further, the master control unit is further used for controlling each of the subcontrol units to perform clock timing synchronization during initialization.

Further, the master control unit is further used for interrupting work of a battery swap station subsystem that is located in communication jam or in an abnormal state.

Further, the battery swap station is divided into multiple battery swap station subsystems according to a local principle; each of the battery swap station subsystems includes multiple sensors and actuating mechanisms; communication is performed between the multiple sensors and actuating mechanisms of each battery swap station subsystem by adopting communication cables or in a wireless communication manner; the multiple battery swap station subsystems communicate with one another in the wireless communication manner.

Further, each of the battery swap station subsystems includes an RGV subsystem, a battery swap platform subsystem and a battery compartment lift subsystem.

Another aspect of the present invention provides a battery swap station, including the aforementioned battery swap station control system and battery swap station subsystems.

Further, each of the battery swap station subsystems includes an RGV subsystem, a battery swap platform subsystem and a battery compartment lift subsystem.

Compared with the prior art, the present invention has obvious advantages and beneficial effects. By virtue of the aforementioned technical solutions, the battery swap station control system based on wireless communication and the battery swap station in the present invention may achieve considerable technological progress and practicality, have industrialized extensive utilization values, and at least have the following advantages:
(1) in the present invention, the wired communication and the communication control manner of the slide link components are replaced with the wireless communication control manner, use of communication cables is reduced, the battery swap station control system is convenient to maintain and flexible in networking, and real-time control efficiency of the battery swap station is increased;
(2) compared with the traditional wireless control, since control of position loops and speed loops of motors and the like needs an extremely high real-time control requirement, the subcontrol units perform real-time control on corresponding battery swap station subsystems, open isochronous rapid interrupt to be used for responding to linkage stop and transmitting own faults, directly come round a logical layer and a system interface to rapidly execute a hardware layer, and open multithread operations to be specially used for responding to fault interrupt and linkage stop;
   the master control unit processes and stores the state of each subcontrol unit and the process data. The subcontrol unit corresponding to each battery swap station subsystem interacts with the state timing sequence of the master control unit so as to form distributed control and centralized management, and the real-time property and reliability of the battery swap station control are increased;
(3) the state management module is increased between the master control unit and the subcontrol units, dispatching of each subcontrol unit can be dynamically and reasonably utilized, the known timing sequence is transmitted according to the master control unit, the subcontrol units are notified of memory recovery in advance, and some subcontrol units can be rapidly removed under conditions that the subcontrol units are abnormal and the whole system is not influenced;
(4) in the present invention, in a state of meeting motion control requirements, a wireless state communication rate is increased.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are described in detail below in combination with drawings

### Brief Description of the Drawings

Fig. 1 is a schematic diagram of a battery swap station control system based on wireless communication provided by one embodiment of the present invention;
Fig. 2 is a schematic diagram of a battery swap station provided by one embodiment of the present invention.

**Major Reference Signs:**

| | | | |
|---|---|---|---|
| 1: | master control unit | 2: | state management module |
| 3: | subcontrol unit | 4: | RGV subsystem |
| 5: | battery swap platform subsystem | 6: | battery compartment lift subsystem |

### Detailed Description of the Embodiments

In order to further illustrate the technical means and effects adopted in the present invention to achieve the intended purpose of the invention, specific embodiments and effects of a battery swap station control system based on wireless communication and a battery swap station proposed in accordance with the present invention are described in detail below, in conjunction with the drawings and preferred embodiments.

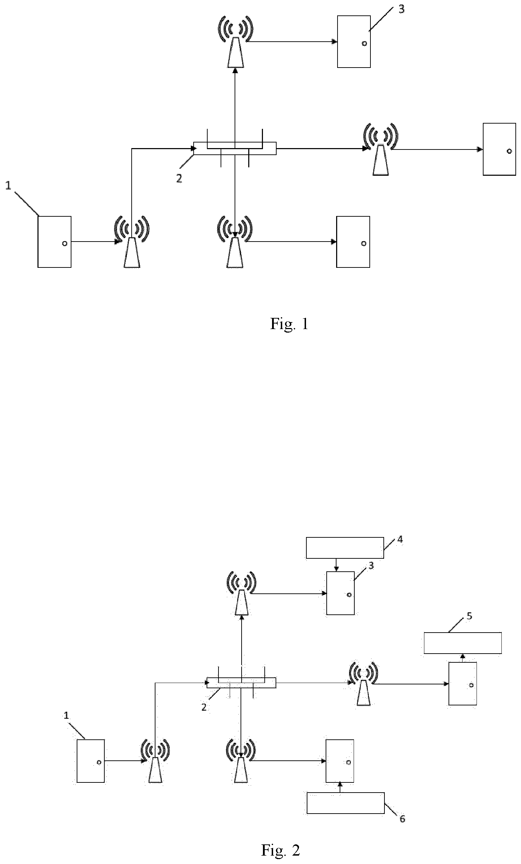

As shown in Fig. 1, the battery swap station control system based on wireless communication includes a master control unit 1, a state management module 2 and multiple subcontrol units 3, wherein, the master control unit 1 communicates with the state management module 2 in a wireless communication manner; and each of the subcontrol units 3 respectively communicates with the state management module 2 in a wireless communication manner. In the present invention, a hardwired connection communication manner adopted by a current battery swap station control system is replaced with a wireless communication manner, cables are saved, and the battery swap station control system is easy to maintain and flexible in networking. The master control unit 1 is used for transmitting a corresponding control instruction to the state management module 2 according to battery swap requirements; the state management module 2 is used for calling corresponding subcontrol units 3 according to the control instruction and controlling an operation time sequence of each subcontrol unit 3; and each of the subcontrol units 3 controls one battery swap station subsystem in real time.

In the example as shown in Fig. 2, the battery swap station is divided into multiple battery swap station subsystems according to a local principle; each of the battery swap station subsystems includes multiple sensors and actuating mechanisms; communication is performed between the multiple sensors and actuating mechanisms of each battery swap station subsystem by adopting communication cables or in a wireless communication manner; and the multiple battery swap station subsystems communicate with one another in the wireless communication manner. In Fig. 2, each of the battery swap station subsystems comprises an RGV subsystem 4, a battery swap platform subsystem 5 and a battery compartment lift subsystem 6. However, it is understandable that, a division manner of the battery swap station subsystems is not limited to this. The battery swap station subsystems may be more delicately divided according to factors such as specific control requirements, or divided in other forms. For example, the battery swap station is divided into a battery swap platform subsystem, a battery pack storage subsystem, a battery pack swap subsystem, an RGV subsystem and the like. The sensors include a range sensor, a displacement sensor, a temperature sensor, a hydraulic sensor and the like. The actuating mechanisms include a lifting mechanism, a bolt tightening mechanism, a servo motor and the like.

The various battery swap station subsystems may be continuously connected in a wired communication manner according to the local principle. The subcontrol units 3 corresponding to each battery swap station subsystem are connected with the master control unit 1 and the state management module 2 in a wireless communication manner. With the adoption of a control mode of distributed control and centralized management, real-time control efficiency is increased. The mode of distributed control and centralized management is a master-slave question-answer mode. By taking the subcontrol units as local control units of the battery swap station subsystems, response implementation is ensured, and according to synchronous call of the master control unit, the timing sequence is entirely controlled so as to meet the battery swap requirement.

Components of the battery swap station control system are respectively described below:

### (I) Subcontrol unit

Each of the subcontrol units 3 is subjected to individual real-time management, for controlling corresponding battery swap station subsystems. The subcontrol units 3 set two task cycles, that is, a first task cycle and a second task cycle respectively; the first task cycle is smaller than the second task cycle; the first task cycle is a rapid task cycle; and priority of the first task cycle is higher than that of the second task cycle. The subcontrol units 3 include core registers. With the adoption of a multi-core multi-thread operating manner, hardware interfaces of the battery swap station subsystems are isochronously and constantly scanned in the first task cycle. If hardware faults of the battery swap station subsystems occur, the subcontrol units 3 do not need to communicate with the master control unit via system interfaces, but directly rapidly communicate in a physical scan area via hardware interfaces 10 so as to perform fault response. The fault response includes fault interrupt and linkage downtime among the various battery swap station subsystems, thus the real-time property and efficiency of battery swap station control are increased.

In the first task cycle, the subcontrol units 3 receive execution start information transmitted by the state management module 2. With respect to actuating mechanisms having extremely high real-time requirements, such as servo motors of the battery swap station subsystems and the like, the subcontrol units 3 output dynamic response instructions to the battery swap station subsystems in real time so as to perform individual internal control. For process data such as temperature, water level and the like, a slow task cycle is opened, that is, the second task cycle. When the first task cycle is located in an idle condition, the process data enters the second task cycle, the process data of the battery swap station subsystems is acquired, and the process data is uploaded to the state management module 2.

Since control of position loops and speed loops of motors and the like needs an extremely high real-time control requirement, the subcontrol units perform real-time control on the battery swap station subsystems by adopting a strategy of distributed management and centralized control, opens the multithread operations to be used for responding to isochronous rapid interrupt so as to be used for responding to linkage stop and transmitting own faults, and directly come round a logical layer and a system interface to rapidly execute a hardware layer. Therefore, the control real-time property and response efficiency are increased.

### (II) State management module

The state management module 2 includes a cache unit, used for storing data contents of the subcontrol units 3 and the master control unit 1 in one or more preset cycles in real time, wherein each preset cycle is greater than or equal to the second task cycle. The data contents may be set according to specific control requirements. For example, the data contents can be set as data contents within 10 cycles before real-time storage. The cache unit can regularly acquire the data of the master control unit 1 and each of the subcontrol units 3 in real time or in a preset time period, and sort and store the acquired data.

The cache unit is provided with a retransmission mechanism; when the subcontrol units 3 have communication failure and perform handshake communication with the cache unit, after communication connection is established, the cache unit retransmits data contents of the corresponding subcontrol units 3 in one cycle or multiple cycles currently to the corresponding subcontrol units 3, so that the corresponding battery swap station subsystems can rapidly continue to operate.

The state management module 2 performs interface call of the subcontrol units 3 in real time according to the state timing sequence, and transmits a real-time local task requirement. The cache unit includes a cache control subunit and also has node tracking resource capacity. When a battery swap station subsystem corresponding to a certain subcontrol unit 3 is located in an idle state, the cache control subunit may recover corresponding idle memory in time and control the idle memory to be used for storing control subunit data in other idle states, thereby increasing the control real-time property.

The state management module 2 further includes a data forwarding unit, used for receiving the process data of the subcontrol units 3, collecting the process data, and forwarding the process data to the master control unit 1 so as to perform batch processing and storage.

The state management module 2 is capable of dynamically and reasonably dispatching each of the subcontrol units 3, transmitting the known timing sequence according to the master control unit, and notifying the subcontrol units of memory recovery in advance. Moreover, some subcontrol units 3 can be rapidly removed under conditions that the subcontrol units are abnormal and the whole control system is not influenced. Therefore, functions such as power failure retransmission of the subcontrol units 3 and removal and re-networking of the abnormal subcontrol units 3 can be realized.

### (III) Master control unit

The master control unit 1 is mainly used for allocating state maneuvering steps of the subsystems, and processing and storing the process data of each battery swap station subsystem.

The master control unit 1 is further used for performing analytic processing on the process data and transmitting a corresponding feedback instruction. The master control unit 1 may perform qualitative analysis on big data in the form of process data, so as to form pre-diagnosis. For example, the master control unit 1 compares the process data with a preset process data scope. If the process data is not included in the preset process data scope, the master control unit controls to transmit an alarm signal, and control reliability is increased.

The master control unit 1 is further used for controlling each of the subcontrol units 3 to perform clock timing synchronization during initialization. Clocks of each of the subcontrol units 3 and the master control unit 1 are controlled to be located in a synchronization state, thereby ensuring real-time response accuracy of the system and also ensuring response interrupt accuracy of each of the subcontrol units 3.

The master control unit 1 may further actively interrupt work of a battery swap station subsystem that is located in communication jam or in an abnormal state according to an actual operation condition. Specifically, when the battery swap station subsystem is located in communication jam or in the abnormal state, the master control unit 1 transmits an interrupt control instruction to the state management module 2, wherein the interrupt control instruction includes address information of a subcontrol unit 3 corresponding to the battery swap station subsystem that is located in communication jam or in the abnormal state. The state management module 2 forwards the interrupt control instruction to the corresponding subcontrol unit 3, and the subcontrol unit 3 interrupts work of the corresponding battery swap station subsystem according to the interrupt control instruction. In the whole process, normal work of the other subcontrol units 3 is not influenced.

Embodiments of the present invention provide the battery swap station control system based on wireless communication. The wired communication and the communication control manner of the slide link components are replaced with the wireless communication control manner, use of communication cables is reduced, the battery swap station control system is convenient to maintain and flexible in networking, and real-time control efficiency of the battery swap station is increased. In addition, compared with the traditional wireless control, since control of the position loops and speed loops of motors and the like needs the extremely high real-time control requirement, the subcontrol units perform real-time control on the corresponding battery swap station subsystems, open isochronous rapid interrupt to be used for responding to linkage stop and transmitting own faults, directly come round the logical layer and the system interface to rapidly execute the hardware layer, and open the multithread operations to be specially used for responding to fault interrupt and linkage stop; the master control unit processes and stores the state of each subcontrol unit and the process data. The subcontrol unit corresponding to each battery swap station subsystem interacts with the state timing sequence of the master control unit so as to form distributed control and centralized management, and the real-time property and reliability of the battery swap station control are increased; moreover, the state management module is increased between the master control unit and the subcontrol units, thus dispatching of each subcontrol unit can be dynamically and reasonably utilized, the known timing sequence is transmitted according to the master control unit, the subcontrol units are notified of the memory recovery in advance, and some subcontrol units can be rapidly removed under the condition that the subcontrol units are abnormal and the whole system is not influenced. In the present invention, in the state of meeting motion control requirements, the wireless state communication rate is increased.

Embodiments of the present invention further provide a battery swap station. As shown in Fig. 2, the battery swap station includes any of the battery swap station control systems in the above examples, and further includes multiple battery swap station subsystems. The battery swap station control system includes a master control unit 1, a state management module 2 and multiple subcontrol units 3. The master control unit 1 is used for transmitting a corresponding control instruction to the state management module 2 according to battery swap requirements; the state management module 2 is used for calling corresponding subcontrol units 3 according to the control instruction and controlling an operation time sequence of each subcontrol unit 3; and each of the subcontrol units 3 controls one battery swap station subsystem in real time.

In the example as shown in Fig. 2, the battery swap station is divided into multiple battery swap station subsystems according to a local principle; each of the battery swap station subsystems includes multiple sensors and actuating mechanisms; communication is performed between the multiple sensors and actuating mechanisms of each battery swap station subsystem by adopting communication cables or in a wireless communication manner; and the multiple battery swap station subsystems communicate with one another in the wireless communication manner. Each of the battery swap station subsystems includes an RGV subsystem 4, a battery swap platform subsystem 5 and a battery compartment lift subsystem 6. However, it is understandable that, a division manner of the battery swap station subsystems is not limited to this. The battery swap station subsystems may be more delicately divided according to factors such as specific control requirements, or divided in other forms. For example, the battery swap station is divided into a battery swap platform subsystem, a battery pack storage subsystem, a battery pack swap subsystem, an RGV subsystem and the like. The sensors include a range sensor, a displacement sensor, a temperature sensor, a hydraulic sensor and the like. The actuating mechanisms include a lifting mechanism, a bolt tightening mechanism, a servo motor and the like.

The various battery swap station subsystems may be continuously connected in a wired communication manner according to the local principle. The subcontrol units 3 corresponding to each battery swap station subsystem are connected with the master control unit 1 and the state management module 2 in a wireless communication manner. With the adoption of a control mode of distributed control and centralized management, real-time control efficiency is increased. The mode of distributed control and centralized management is a master-slave question-answer mode. By taking the subcontrol units as local control units of the battery swap station subsystems, response implementation is ensured, and according to synchronous call of the master control unit, the timing sequence is entirely controlled so as to meet the battery swap requirement

Among the various battery swap station subsystems of the battery swap station, the wired communication and the communication control manner of the slide link components are replaced with the wireless communication control manner, the use of communication cables is reduced, and the battery swap station control system is convenient to maintain and flexible in networking; the control system adopts the manner of distributed control and centralized management, so that the various components of the battery swap station are subjected to coordinated control, and the real-time control efficiency of the battery swap station is increased, thereby increasing the battery swap efficiency and improving the user experience.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. A battery swap station control system based on wireless communication, comprising: a master control unit, a state management module and multiple subcontrol units,
wherein, the master control unit communicates with the state management module in a wireless communication manner; and each of the subcontrol units respectively communicates with the state management module in a wireless communication manner;
the master control unit is used for transmitting a corresponding control instruction to the state management module according to battery swap requirements;
the state management module is used for calling corresponding subcontrol units according to the control instruction and controlling an operation time sequence of each subcontrol unit; and each of the subcontrol units controls one battery swap station subsystem in real time.

2. The battery swap station control system based on wireless communication according to claim 1, wherein the subcontrol units set two task cycles, that is, a first task cycle and a second task cycle respectively; the first task cycle is smaller than the second task cycle; in the first task cycle, dynamic response instructions are output to actuating mechanisms of the battery swap station subsystems in real time so as to perform individual internal control;
and when the first task cycle is located in an idle condition, the battery swap station subsystems enter the second task cycle, process data of the battery swap station subsystems is acquired, and the process data is uploaded to the state management module.

3. The battery swap station control system based on wireless communication according to claim 2, wherein the subcontrol units comprise core registers; hardware interfaces of the battery swap station subsystems are scanned in the first task cycle in a multi-core and multithreaded manner, and if hardware faults of the battery swap station subsystems occur, the subcontrol units directly perform fault response.

4. The battery swap station control system based on wireless communication according to claim 3, wherein the fault response comprises fault interrupt and linkage downtime among the various battery swap station subsystems.

5. The battery swap station control system based on wireless communication according to claim 2, wherein the process data comprises temperature and water level.

6. The battery swap station control system based on wireless communication according to claim 2, wherein the state management module comprises a cache unit, used for storing data contents of the subcontrol units and the master control unit in one or more preset cycles in real time, wherein each preset cycle is greater than the second task cycle.

7. The battery swap station control system based on wireless communication according to claim 6, wherein the cache unit is provided with a retransmission mechanism; when the subcontrol units have communication failure, after communication connection is established between the subcontrol units and the cache unit, the cache unit transmits data contents of the subcontrol units in one cycle or multiple cycles currently to the subcontrol units.

8. The battery swap station control system based on wireless communication according to claim 6, wherein the cache unit comprises a cache control subunit; when a battery swap station subsystem corresponding to a certain subcontrol unit is located in an idle state, the cache control subunit recovers corresponding idle memory and controls the idle memory to be used for storing control subunit data in other idle states.

9. The battery swap station control system based on wireless communication according to claim 2, wherein the state management module further comprises a data forwarding unit, used for receiving the process data and forwarding the process data to the master control unit.

10. The battery swap station control system based on wireless communication according to claim 2, wherein the master control unit is further used for performing analytic processing on the process data and transmitting a corresponding feedback instruction.

11. The battery swap station control system based on wireless communication according to claim 10, wherein the master control unit compares the process data with a preset process data scope, and if the process data is not included in the preset process data scope, the master control unit controls to transmit an alarm signal.

12. The battery swap station control system based on wireless communication according to claim 1, wherein the master control unit is further used for controlling each of the subcontrol units to perform clock timing synchronization during initialization.

13. The battery swap station control system based on wireless communication according to claim 1, wherein the master control unit is further used for interrupting work of a battery swap station subsystem that is located in communication jam or in an abnormal state.

14. The battery swap station control system based on wireless communication according to any one of claims 1-13, wherein the battery swap station is divided into multiple battery swap station subsystems according to a local principle; each of the battery swap station subsystems includes multiple sensors and actuating mechanisms; communication is performed between the multiple sensors and actuating mechanisms of each battery swap station subsystem by adopting communication cables or in a wireless communication manner; the multiple battery swap station subsystems communicate with one another in the wireless communication manner.

15. The battery swap station control system based on wireless communication according to claim 14, wherein each of the battery swap station subsystems comprises an RGV subsystem, a battery swap platform subsystem and a battery compartment lift subsystem.

16. A battery swap station, comprising: the battery swap station control system according to any one of claims 1-15, and further comprising multiple battery swap station subsystems.

17. The battery swap station according to claim 16, wherein each of the battery swap station subsystems comprises an RGV subsystem, a battery swap platform subsystem and a battery compartment lift subsystem.
